# EUROPEAN PATENT APPLICATION

(11) **EP 4 748 219 A1**
(43) Date of publication of application: **27.05.2026**
(21) Application number: 25218283.7
(22) Date of filing: 25.11.2025
(51) Int. Cl.: A01D 34/416, A01D 34/73

(54) **TRIMMER HEAD ASSEMBLY**

(30) Priority: 26.11.2024 US 202463724997 P
(71) Applicant: Techtronic Cordless GP, Anderson, SC 29621 (US)
(72) Inventor: HOLMAN, Christopher Alan, Anderson SC, 29621 (US)
(74) Representative: Zimmermann & Partner Patentanwälte mbB

(57) **Abstract**

A trimmer head assembly includes a top housing and a bottom housing selectively attached to the top housing. The top housing may include an assembly cap, an engagement button, and a retention tab. The assembly cap may define a radial access slot. The engagement button may be slidably received within the radial access slot to move along a radial direction. The retention tab may be fixed to the engagement button to move therewith along the radial direction. The retention tab may be disposed apart from the radial access slot. The bottom housing may include a frame and a complementary tab. The frame may define one or more trimmer openings to receive a cutting element extending therethrough. The complementary tab may be fixed to the frame in selective radial alignment and engagement with the retention tab to secure the bottom housing to the top housing.

## Description

### CROSS-REFERENCE TO RELATED APPLICATIONS

The present application claims priority to U.S. Provisional Patent Application Serial No. 63/724,997 filed on November 26, 2024, the disclosure of which is incorporated by reference herein in its entirety.

### FIELD

The present subject matter relates generally to trimmer devices, such as landscape trimmers, and more particularly to a trimmer head assembly for a trimmer.

### BACKGROUND

Landscape trimmers are typically useful for cutting grass or weeds, and may be used for edging around trees, fences, landscape borders, etc. Conventional landscape trimmers are often referred to as string trimmers and include an elongated shaft with a rotating head attached to one end of the elongated shaft. A spool or segment of monofilament string is often fixed to the rotating head in such embodiments. Thus, the monofilament string may rotate with the rotating head and act as cutting element. Some trimmers having solid, non-string cutting elements (e.g., blades) attached to the rotating head.

### BRIEF DESCRIPTION

Aspects and advantages of the present disclosure will be set forth in part in the following description, or may be obvious from the description, or may be learned through practice of the technology.

There can be various shortcomings for existing trimmers. For instance, when selecting or buying a trimmer, a user is often forced to decide whether string cutting elements or solid blades are preferred. If a user later wishes to use a different cutting element, that user must often purchase a completely new rotating head or landscape trimmer. Moreover, regardless of what type of cutting element is chosen, the cutting elements will eventually need to be replaced. This typically requires significant disassembly of the rotating head. Existing designs can all be cumbersome sources of frustration for users.

Accordingly, improved trimmers or trimmer head assemblies are desired in the art. In particular, a trimmer head assembly that provides features for permitting a user to selectively or alternately utilize a string or blade cutting element would be advantageous. Additionally or alternatively, a trimmer head assembly that provides for ready access to a cutting element without requiring significant disassembly.

In accordance with one embodiment, a trimmer head is provided. The trimmer head may include a top housing and a bottom housing selectively attached to the top housing. The top housing may include an assembly cap, an engagement button, and a retention tab. The assembly cap may define a radial access slot. The engagement button may be slidably received within the radial access slot to move along a radial direction. The retention tab may be fixed to the engagement button to move therewith along the radial direction. The retention tab may be disposed apart from the radial access slot. The bottom housing may include a frame and a complementary tab. The frame may define one or more trimmer openings to receive a cutting element extending therethrough. The complementary tab may be fixed to the frame in selective radial alignment and engagement with the retention tab to secure the bottom housing to the top housing.

In accordance with another embodiment, a trimmer head is provided. The trimmer head may include a top housing and a bottom housing selectively attached to the top housing. The top housing may include an assembly cap, a first engagement button, a second engagement button, and a retention tab. The assembly cap may define a first radial access slot and a second radial access slot circumferentially spaced apart from the first radial access slot. The retention tab may be in simultaneous, linked, mechanical communication with the first and second engagement buttons to move radially in response to a coordinated movement of the first and second engagement buttons, the retention tab being disposed apart from the radial access slot. The bottom housing may include a frame and a complementary tab. The frame may define one or more trimmer openings to receive a cutting element extending therethrough. The complementary tab may be fixed to the frame in selective radial alignment and engagement with the retention tab to secure the bottom housing to the top housing.

These and other features, aspects and advantages of the present disclosure will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present application, including the best mode of making and using the present systems and methods, directed to one of ordinary skill in the art, is set forth in the specification, which makes reference to the appended figures, in which:
FIG. 1 provides a perspective view of a landscape trimmer according to exemplary embodiments of the present disclosure;
FIG. 2 provides a perspective view of a trimmer head in accordance with embodiments of the present disclosure;
FIG. 3 provides a perspective view of the exemplary trimmer head of FIG. 2, wherein a portion of the top cover has been rendered as transparent for clarity;
FIG. 4 provides a perspective view of a portion of the top housing and bottom housing of the exemplary trimmer head of FIG. 2;
FIG. 5 provides a perspective view of a portion of the top housing and bottom housing of the exemplary trimmer head of FIG. 2;
FIG. 6 provides a partially exploded perspective view of a portion of the top housing and bottom housing of the exemplary trimmer head of FIG. 2;
FIG. 7 provides another partially exploded perspective view of a portion of the top housing and bottom housing of the exemplary trimmer head of FIG. 2;
FIG. 8 provides a perspective view of a portion of the bottom housing of the exemplary trimmer head of FIG. 2;
FIG. 9 provides a perspective view of a bottom housing of a trimmer head in accordance with embodiments of the present disclosure;
FIG. 10 provides another perspective view of the exemplary bottom housing of FIG. 9;
FIG. 11 provides a perspective view of a portion of the exemplary bottom housing of FIG. 9;
FIG. 12 provides a perspective view of a portion of the exemplary bottom housing of FIG. 9;
FIG. 13 provides a perspective view of a portion of the exemplary bottom housing of FIG. 9;
FIG. 14 provides a perspective view of a portion of the exemplary bottom housing of FIG. 9;
FIG. 15 provides a perspective view of a frame of the exemplary bottom housing of FIG. 9; and
FIG. 16 provides a perspective view of an interior button of the exemplary bottom housing of FIG. 9.

### DETAILED DESCRIPTION

Reference now will be made in detail to embodiments of the present disclosure, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, aspects of the present disclosure provide an easily separable trimmer head for a landscape trimmer. For instance, a top housing may be provided with one or more engagement buttons that a user can squeeze to quickly and easily release the bottom housing from the top housing. The engagement buttons can direct movement of one or more retention tabs that are spaced apart from the engagement buttons. Moreover, the bottom housing can be separated from the top housing while the engagement buttons and retention tabs remain on the top housing. In additional or alternative aspects, different bottom housings can be swapped onto the top housing. For instance, one bottom housing holding a monofilament or string trimmer line can be removed and replaced with another bottom housing holding one or more flail arms, and vice versa. In further additional or alternative aspects of the present disclosure, a bottom housing having one or more interior buttons may be provided to permit removal of one or more flail arms in response to a user squeezing the one or more interior buttons. In yet further additional or alternative aspects of the present disclosure, a bottom housing having one or more brush elements or scrubbers (e.g., bristles, sponge, polishing mat, etc.) may be provided for use cases.

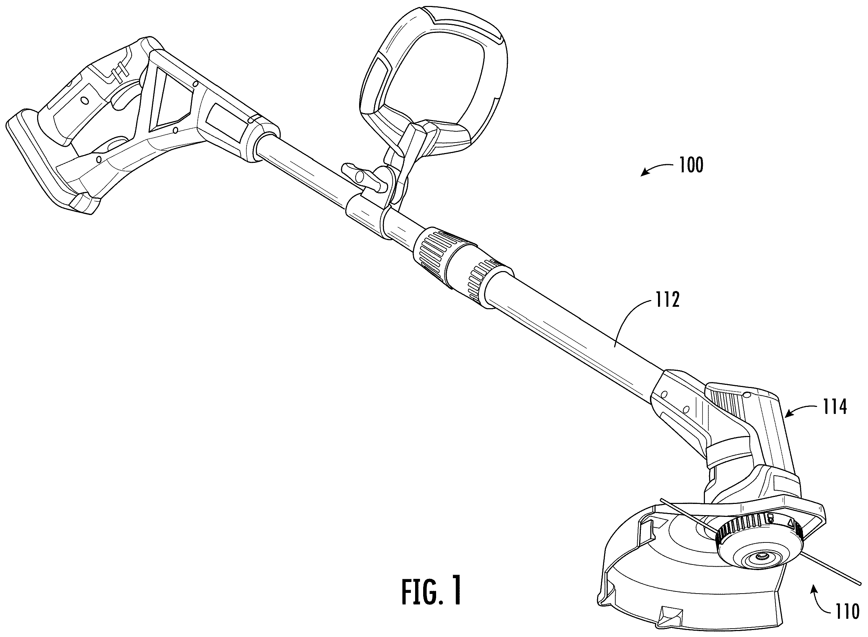

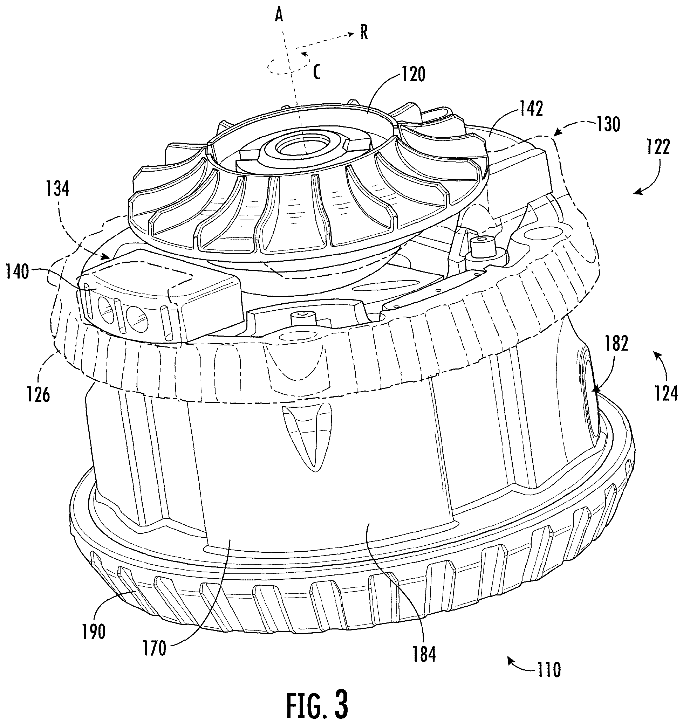

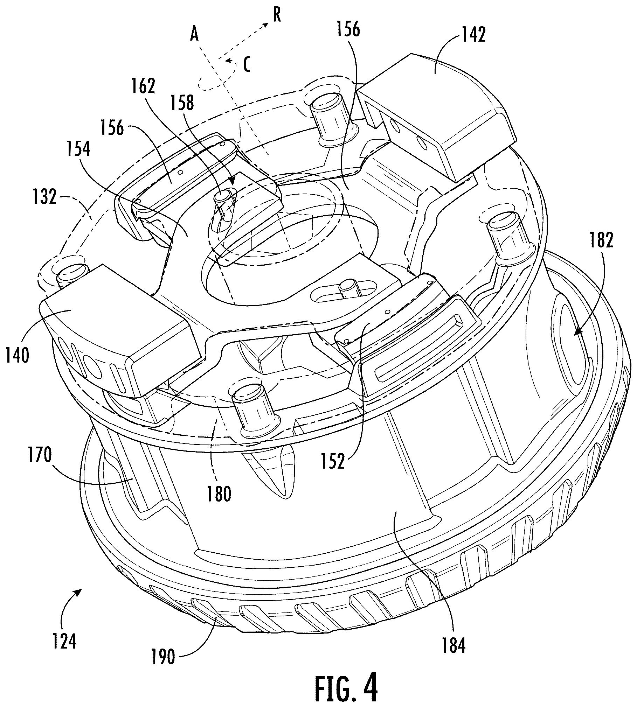

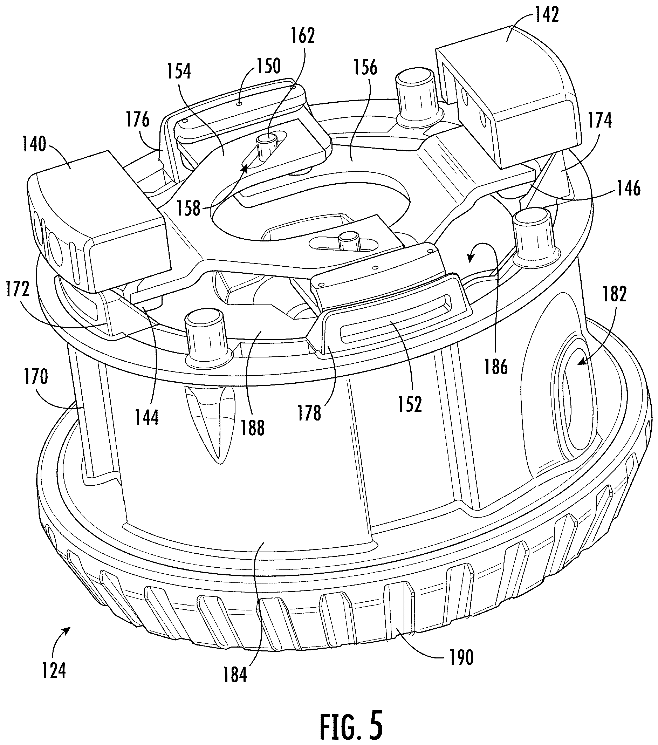

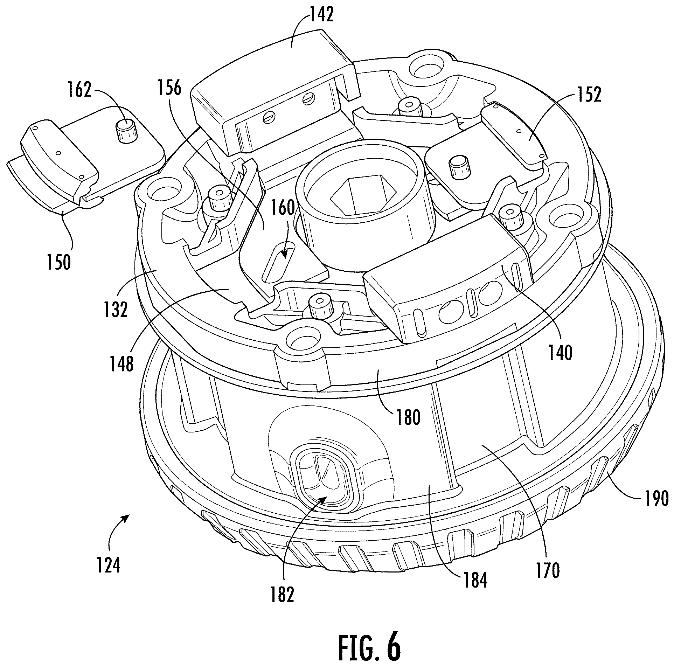

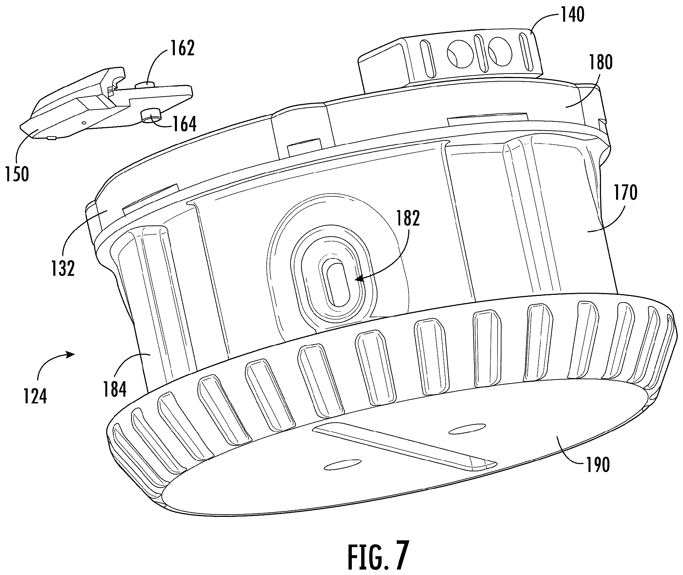

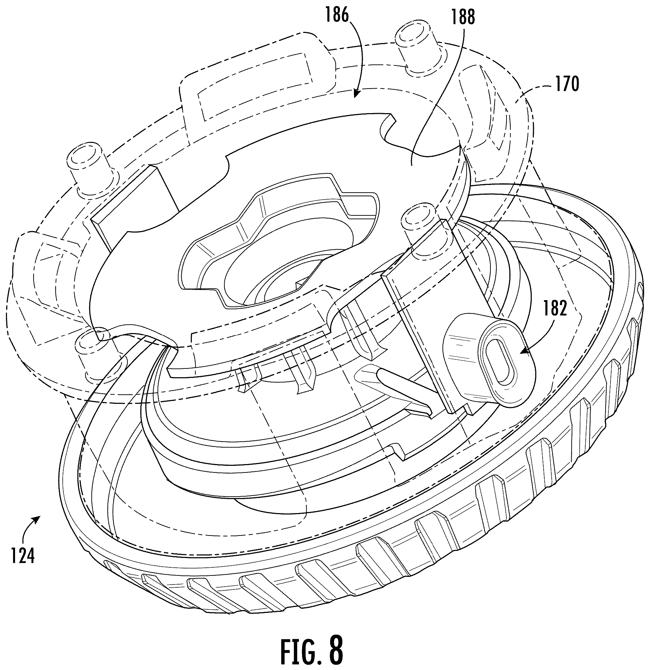

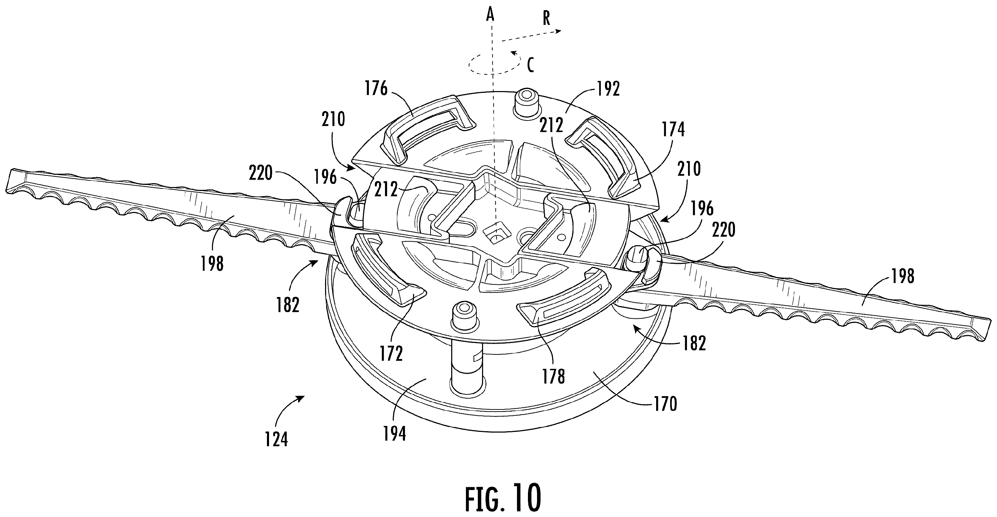

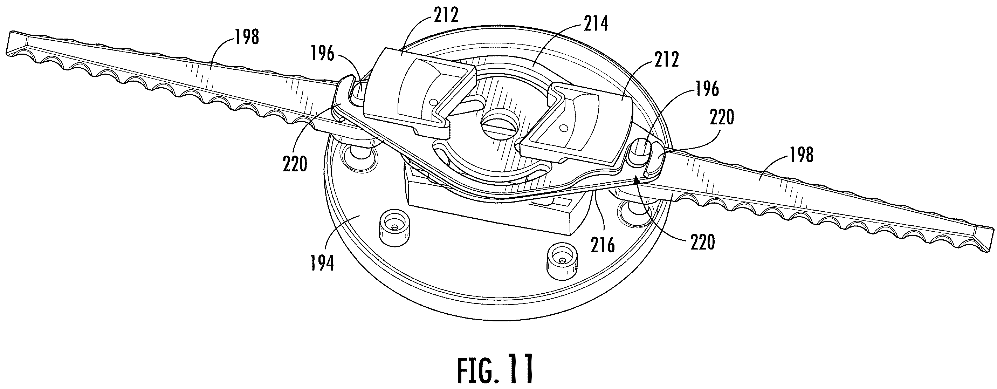

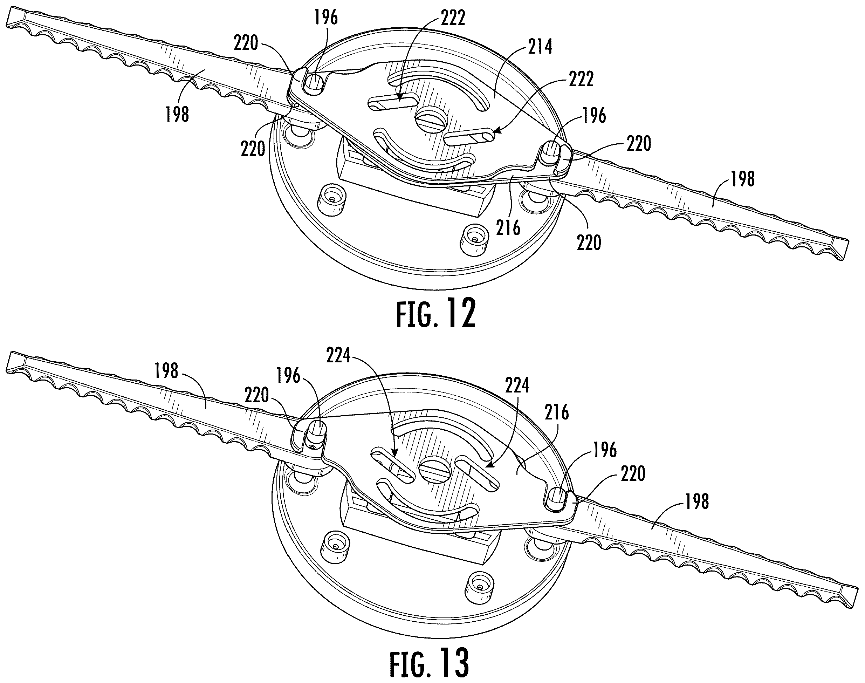

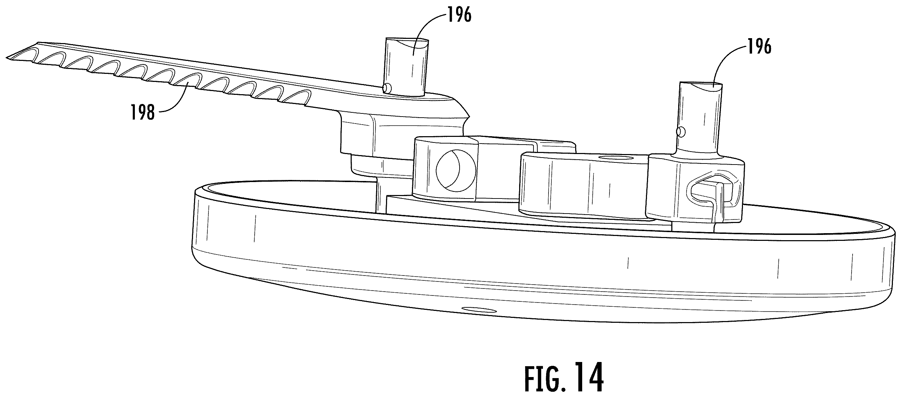

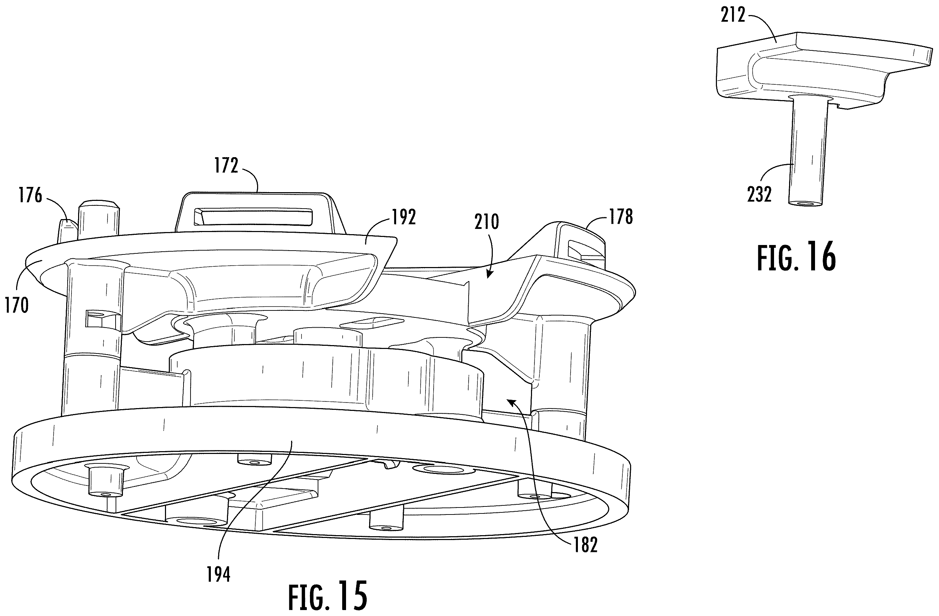

Referring now to the drawings, FIGS. 1 through 16 provide various views illustrating a trimmer head 110 (including portions thereof) for a landscape trimmer 100 (FIG. 1), according to exemplary embodiments of the present disclosure.

In certain embodiments, the landscape trimmer 100 is a hand-held powered landscape trimmer 100 that include an elongated shaft 112 for supporting a handle with a grip, as generally shown in FIG. 1. However, these embodiments are merely provided for illustrative purposes and are not intended to limit the present disclosure to any particular landscape trimmer. Thus, it is understood that in alternative embodiments, another suitable type of powered trimmer may be provided and, for example, may include a frame and wheels for movement over the ground. Alternatively or additionally, another suitable type of tool (not shown) such as scrubber may be provided with, for example, a separable cleaning head employing aspects of the invention set forth herein.

Generally, the trimmer 100 includes a drivetrain in which an output shaft is mechanically engaged with a motor 114 (e.g., a two-cycle gas engine, an electric motor, etc.) for driving rotation of the trimmer head 110. For instance, the drivetrain may connect to the trimmer head 110 at a gear head 120 that is secured to or formed as part of the output shaft. The output shaft or gear head 120 may be secured to the top housing 122, such as via a threaded bolt-nut connection (or any other suitable joint). In the illustrated embodiments, a flanged hex nut may be pressed into a hex hole in the top housing 122 while a threaded arbor (not pictured) from the output shaft or gear head 120 screws into the flanged hex nut.

As shown, the trimmer head 110 defines an axial direction A (e.g., at an axis of rotation), as well as radial direction R perpendicular to the axial direction A and a circumferential direction C about the axial direction A. The trimmer head 110 generally provides a top housing 122 and a removable bottom housing 124. As illustrated, the bottom housing 124 may be disposed axially beneath at least a portion of the top housing 122. Moreover, as will be described in greater detail below, the bottom housing 124 may be selectively attached to (and thus selectively removed from) the top housing 122. During use, the bottom housing 124 may hold or support one or more cutting agents (e.g., one or more flail blades 198 or trimmer lines-not pictured) to rotate with the trimmer head 110 and effectuate cutting of, for example, grass, shrubs, vegetation, etc. In examples not shown, the head may alternatively or additionally hold other tool elements such as a scrubber head for cleaning a surface.

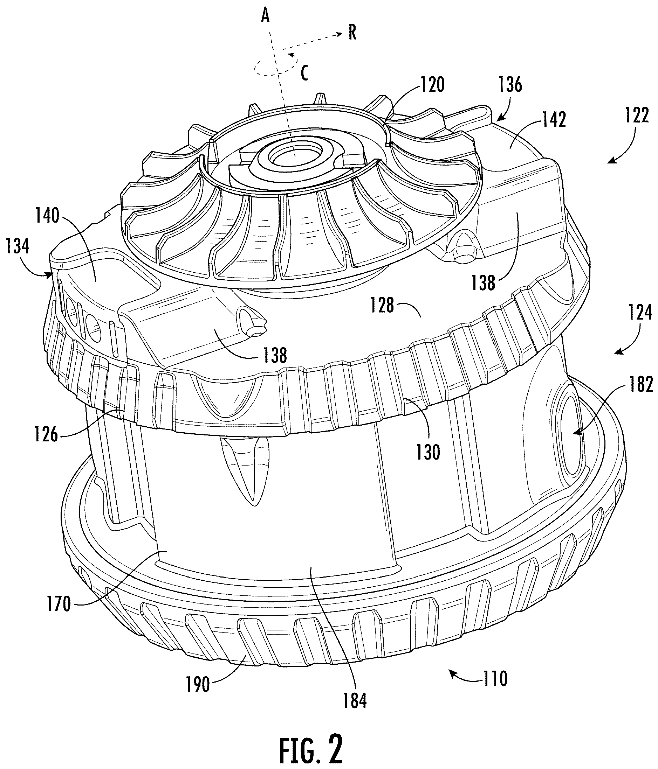

Turning especially to FIGS. 2 through 7, various views illustrate top housing 122, including portions thereof. In some embodiments, top housing 122 includes an assembly cap 126. Assembly cap 126 may form an exterior portion of top housing 122 having an upper wall 128 and a perimeter wall 130. As part of top housing 122, assembly cap 126 may be attached to the drivetrain (e.g., at the gear head 120) of the trimmer 100 (FIG. 1), such as via a connection column of a drive plate 132. In the illustrated embodiments, assembly cap 126 is received on drive plate 132. Perimeter wall 130 may extend along the circumferential direction radially outward of the drive plate 132. As shown, perimeter wall 130 may surround drive plate 132. Upper wall 128 may define a central wall opening through which connection column is received.

In certain embodiments, assembly cap 126 defines one or more radial access slots 134, 136. For instance, assembly cap 126 may define a first radial access slot 134 and a second radial access slot 136. As shown, the access slot(s) 134, 136 may be defined through the perimeter wall 130 (e.g., along the radial direction R) or through corresponding raised ridges 138 extending above at least a portion of the upper wall 128 or perimeter wall 130.

In certain embodiments, the upper wall 128 (e.g., at raised ridge 138) defines a vertical-access segment of the radial access slot 134 or 136. In the illustrated embodiments, the radial access slots 134, 136 are circumferentially spaced apart. In other words, the second radial access slot 136 may be circumferentially spaced apart from the first radial access slot 134. Optionally, the radial access slots 134, 136 may be spaced apart from each other about the axial direction A by 180°. The first and second radial access slots 134, 136 may be diametrically opposed, such as along a common vector of the radial direction R.

Along or within each radial access slot 134 or 136, an engagement button 140 or 142 may be received. Specifically, the engagement button 140 or 142 may be slidably received and slidable along the radial direction R to move along the radial direction R (e.g., as motivated or pressed by a user). Certain embodiments, thus, include a first engagement button 140 slidably received along the first radial access slot 134 to move along the first radial access slot 134 and a second engagement button 142 slidably received along the second radial access slot 136 to move along the second radial access slot 136. The engagement buttons 140, 142 may be received or supported on the drive plate 132. For instance, the engagement buttons 140, 142 may be disposed between the drive plate 132 and the assembly cap 126. Generally, the engagement buttons 140, 142 may be biased radially outward. For instance, one or more biasing elements, such as a coil spring, leaf spring, or torsion spring may be provided within the assembly cap 126 to drive the engagement buttons 140, 142 radially outward to provide a force to be overcome by a user pressing the engagement button(s) 140, 142 radially inward along the corresponding radial access slot 134 or 136.

One or more retention tabs may be fixed to each engagement button 140 or 142 to move therewith.

In some embodiments, top housing 122 includes one or more primary retention tabs 144, 146, each primary retention tab 144 or 146 being fixed to a corresponding engagement button 140 or 142 to move therewith along the radial direction R (e.g., along a common radial vector). Thus, exemplary embodiments include a first primary retention tab 144 fixed to the first engagement button 140 to move therewith along the radial direction R and a second primary retention tab 146 fixed to the second engagement button 142 to move therewith along the radial direction R. As shown, the primary retention tab 144 or 146 may be spaced apart from the radial access slot 134 or 136 of the corresponding engagement button 140 or 142. For instance, the primary retention tab 144 or 146 may be disposed below the corresponding engagement button 140 or 142. In exemplary embodiments, the primary retention tab 144 or 146 is disposed within the assembly cap 126. Optionally, each primary retention tab 144 or 146 may be received within a radial recess (e.g., common recess receiving multiple retention tabs or, alternatively, discrete recesses each corresponding to a discrete primary retention tab 144 or 146) defined by a plate base 148 of the drive plate 132. For instance, the primary retention tabs 144, 146 may be disposed between the drive plate 132 and the assembly cap 126.

In additional or alternative embodiments, top housing 122 includes one or more secondary retention tabs 150, 152. Each secondary retention tab 150 or 152 may be attached to one or more engagement buttons 140, 142 and (e.g., circumferentially) spaced apart from each of the radial access slots 134, 136 or primary retention tabs 144, 146 (e.g., if present). Optionally, the secondary retention tab 150 or 152 may be spaced apart from one or more primary retention tabs 144, 146 at an angle of approximately 90° about the axial direction A. In exemplary embodiments, each secondary retention tab 150 or 152 is disposed within the assembly cap 126. Optionally, each secondary retention tab 150 or 152 may be received within a radial recess (e.g., common recess receiving multiple retention tabs or, alternatively, discrete recesses each corresponding to a discrete secondary retention tab) defined by plate base 148. For instance, the secondary retention tabs 150, 152 may be disposed between the drive plate 132 and the assembly cap 126.

Each secondary retention tab 150 or 152 may be radially movable along a distinct radial vector from the engagement buttons 140, 142. For instance, an interior arm 154 or 156 may be fixed to the engagement button 140 or 142 (e.g., apart from the primary retention tab 144 or 146) to move with the engagement button 140 or 142. The interior arm 154 or 156 may include an arc segment extending circumferentially (e.g., within the assembly cap 126) about a portion of the axial direction A, such as to reach or exceed a radial vector approximately 90° apart from the radial vector along which the corresponding engagement button 140 or 142 slides). The interior arm 154 or 156 may define a (e.g., linear) guide channel 158 or 160 non-parallel and non-orthogonal to the radial direction R (e.g., while remaining on a plane defined by the radial direction R or otherwise perpendicular to the axial direction A). The secondary retention tab 150 or 152 may engaged with the interior arm 154 or 156 at the guide channel 158 or 160 to move radially in response to movement of the interior arm 154 or 156. For instance, the secondary retention tab 150 or 152 may include a guide post 162, 164 that sits within and is movable along the guide channel 158 or 160. Thus, secondary retention tab 150 or 152 may move radially in response to movement of the interior arm 154 or 156 that is not along a common radial vector with the movement of the retention tab.

In certain embodiments, a secondary retention tab 150 or 152 is in simultaneous, linked, mechanical communication with multiple engagement buttons 140, 142 (e.g., the first and second engagement buttons 140, 142) to move radially in response to a coordinated movement of such engagement buttons 140, 142. In the illustrated embodiments, a first-button interior arm 154 is fixed to the first engagement button 140 apart from the first radial access slot 134 to move with the first engagement button 140 and partially drive radial movement of a first secondary retention tab 150. A second-button interior arm 156 is fixed to the second engagement button 142 apart from the second radial access slot 136 to move with the second engagement button 142 and further drive radial movement of a first secondary retention tab 150. In particular, the first-button interior arm 154 and second-button interior arm 156 can simultaneously drive the first secondary retention tab 150 in a scissoring movement. As shown, the first-button interior arm 154 may define a first-button-interior-arm (FBIA) guide channel 158 (e.g., linear channel) non-parallel and non-orthogonal to the radial direction R while the second-button interior arm 156 defines a second-button-interior-arm (SBIA) guide channel 160 (e.g., linear channel) non-parallel and non-orthogonal to the radial direction R, such as at an opposite or complementary angle to the FBIA guide channel 158. The first-button interior arm 154 may be axially spaced apart from (e.g., higher or, alternatively, lower than) the second-button interior arm 156. In the illustrated embodiments, the first secondary retention tab 150 comprises an upper axial guide post 162 received within the FBIA guide channel 158 or 160 and a lower axial guide post 164 received within the SBIA guide channel 158 or 160. When assembled, the guide posts 162, 164 may be radially spaced apart from a corresponding complementary tab and, thus, be radially inward from the same.

It is noted that although a first secondary retention tab 150 associated with a first-button interior arm 154 and second-button interior arm 156 is described above, further embodiments may include a similar association between a second secondary retention tab 152 and another first-button interior arm 154 and second-button interior arm 156, as illustrated in the figures and as would be further understood in light of the present disclosure. Additional secondary retention tabs with similar associations are also contemplated.

Turning especially to FIGS. 2 through 10 and 15, various aspects of the bottom housing 124 will be described in further detail. As noted above, bottom housing 124 can be selectively attached to top housing 122. Bottom housing 124 includes a frame 170 and one or more complementary tabs fixed to the frame 170. Generally, one or more of the complementary tabs can be selectively aligned with corresponding retention tabs. When assembled, engagement between a corresponding retention tab and complementary tab may (e.g., in whole or in part) secure bottom housing 124 to top housing 122. In certain embodiments, some or all of the complementary tabs may be received within a portion of the top housing 122. For instance, one or more complementary tabs may be disposed at a common axial level or height as the top housing 122-including or in addition to the corresponding retention tab(s). In some such embodiments, a peripheral rim 180 of the drive plate 132 or top housing 122 in general may surround and block (e.g., radially) external access to the complementary tab(s).

In some embodiments, a primary complementary tab 172 or 174 is fixed to the frame 170 (e.g., at an upper end thereof) in selective radial alignment and engagement with a corresponding retention tab to secure the bottom housing 124 to the top housing 122. For instance, a first primary complementary tab 172 may be fixed to the frame 170 and circumferentially spaced apart from one or more (e.g., all of the) secondary complementary tabs 176, 178. When assembled, the first primary complementary tab 172 may be in selective radial alignment and engagement with the first primary retention tab 144. Additionally or alternatively, a second primary complementary tab 174 may be fixed to the frame 170 and circumferentially spaced apart from one or more (e.g., all of the) secondary complementary tabs 176, 178. When assembled, the second primary complementary tab 174 may be in selective radial alignment and engagement with the second primary retention tab 146.

In additional or alternative embodiments, a secondary complementary tab 176 or 178 is fixed to the frame 170 (e.g., at an upper end thereof) in selective radial alignment and engagement with a corresponding retention tab to secure the bottom housing 124 to the top housing 122. For instance, a first secondary complementary tab 176 may be fixed to the frame 170 and circumferentially spaced apart from one or more (e.g., all of the) primary complementary tabs 172 or 174. When assembled, the first secondary complementary tab 176 being may be in selective radial alignment and engagement with the first secondary retention tab 150. Additionally or alternatively, a second secondary complementary tab 178 may be fixed to the frame 170 and circumferentially spaced apart from one or more (e.g., all of the) primary complementary tabs. When assembled, the second secondary complementary tab 178 may be in selective radial alignment and engagement with the second secondary retention tab 152. Additional secondary complementary tabs with similar secondary retention tab alignments are also contemplated.

Optionally, each of the complementary tabs may be substantially identical (e.g., in form and shape) to each other. Additionally or alternatively, the complementary tabs may be equally spaced along the circumferential direction C. In turn, the retention tabs (e.g., primary and secondary retention tabs 150, 152) may be selectively engaged with or received within any one of the complementary tabs.

As shown, the frame 170 generally defines one or more trimmer openings 182 to receive a cutting agent (e.g., trimmer line or flail head) extending (e.g., radially) therethrough. As oriented in the provided figures, the one or more trimmer openings 182 are disposed below the top housing 122 and complementary tab. Along the axial direction A, the trimmer openings 182 may be defined between an upper end and a lower end of the frame 170 or between top housing 122 and an opposite, bottommost surface of the bottom housing 124.

Turning especially to FIGS. 2 through 8, certain aspects of the present disclosure of bottom housing 124 provide a frame 170 that includes an outer wall 184 extending (e.g., continuously) about the axial direction A, such as along the circumferential direction C. The trimmer openings 182 may be defined along the radial direction R through the outer wall 184. Moreover, the outer wall 184 may define an internal cavity 186 (e.g., radially inward from the trimmer openings 182). A spool 188 may be mounted or mountable within the internal cavity 186. During use, the trimmer line may thus extend from (e.g., the spool 188 within) the internal cavity 186 and through the trimmer openings 182 to act as the cutting agent for objects outside of the trimmer head 110. In some such embodiments, a lower cap 190, such as a bump head cap, may be provided (e.g., for the selective release of trimmer line from the internal cavity 186).

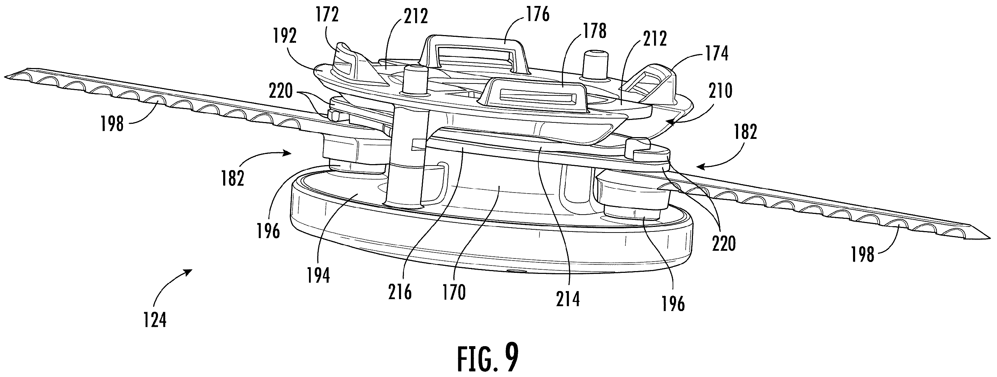

Turning now especially to FIGS. 9 through 16, additional embodiments of bottom housing 124 provide a frame 170 that includes an upper plate 192 and a lower plate 194 axially spaced apart from the upper plate 192. The upper or lower plates 192, 194 may define the one or more trimmer openings 182 (e.g., therebetween). As shown, one or more connection segments extend (e.g., axially) between the upper and lower plate 194 (e.g., to secure the plates together). Separate from or in addition to the connection segments, one or more pivot head posts 196 may extend between the upper and lower plates 192, 194 to support a pivotable flail head as the cutting agent. Optionally, the pivot head posts 196 may be rotationally fixed to the frame 170 and may thus rotate with the frame 170 and bottom housing 124 generally. In other words, the frame 170 and pivot head posts 196 may be rotated together about the axial direction A. Nonetheless, in some such embodiments, each pivot head post 196 is generally permitted to pivot on the frame 170 about its own corresponding pivot axis (e.g., parallel to the axial direction A). Centrifugal force on the corresponding cutting agent (e.g., flail blade 198 or a trimmer line received through a string slot) by the pivot head post 196 tends to extend the cutting agent outward (e.g., in the radial direction R). Tangential force imparted to the cutting agent during a cutting action may then pivot both the cutting agent and the pivot head post 196.

In further additional or alternative aspects of the present disclosure, a bottom housing 124 having one or more interior buttons 212 may be provided to permit removal or attachment of one or more flail arms in response to a user squeezing the one or more interior buttons 212. For instance, a portion of frame 170 (e.g., upper plate 192) may define one or more radial button channels 210 within which the interior buttons 212 are slidably received. As shown, the interior buttons 212 may be diametrically opposed, such as along a common vector of the radial direction R. In turn, the interior buttons 212 may be slidably received and slidable along the radial direction R to move along the radial direction R (e.g., as motivated or pressed by a user). Generally, the interior buttons 212 may be biased radially outward. For instance, one or more biasing elements, such as a coil spring, leaf spring, or torsion spring may be provided on or within the frame 170 to drive the interior buttons 212 radially outward to provide a force to be overcome by a user pressing the interior buttons 212 radially inward along the radial button channel(s) 210.

Generally, the interior buttons 212 may engage one or more rotatable arm blades 214, 216. As shown, a pair of counter-rotating arm blades 214, 216 may be provided below the interior buttons 212 in an axial stack. Thus, an upper counter-rotating arm blade 214 may be disposed on top of a lower counter-rotating arm blade 216. As shown, each arm blade 214 or 216 may include one or more (e.g., radially opposing) hook fingers 220 that extend radially outward in selective engagement with the pivot head posts 196. The hook fingers 220 on the upper and lower arm blades 214, 216 may be open along opposite circumferential vectors and, thus, clamp onto a common pivot head post 196 from opposite circumferential sides. In certain embodiments, the arm blades 214, 216 define mirrored linear blade slots 222, 224 within which a common button post 232 of one or the interior buttons 212 is received. Thus, the upper arm blade may define an upper-blade slot (e.g., linear channel) non-parallel and non-orthogonal to the radial direction R while the lower arm blade defines a lower-blade slot (e.g., linear channel) non-parallel and non-orthogonal to the radial direction R, such as at an opposite or complementary angle to the first-button-interior-arm guide channel 158 or 160. As shown, the blade slots 222, 224 may overlap. Optionally, multiple sets of overlapping upper-blade and lower-blade slots 222, 224 may be provided, such as to receive a corresponding button post 232 from each interior button 212. When assembled, radial movement of the interior blades 214, 216 may drive the arm blades 214, 216 to rotate in opposite directions about the axial direction A to alternately block or uninhibit axial movement of the flail blades 198 on or off the pivot head posts 196. Additionally or alternatively, the blades 214, 216 may support a corresponding pivot head post 196, helping resist centrifugal force that may otherwise motivate the top of the post to tip outwards, keeping the post axis roughly parallel to the axis of rotation of the overall trimmer head.

Further aspects of the disclosure are provided by one or more of the following embodiments:
A trimmer head for a trimmer, the trimmer head defining an axial direction and a radial direction, the trimmer head comprising: a top housing comprising an assembly cap defining a radial access slot, an engagement button slidably received along the radial access slot to move along the radial direction, and a retention tab fixed to the engagement button to move therewith along the radial direction, the retention tab being disposed apart from the radial access slot; and a bottom housing selectively attached to the top housing, the bottom housing comprising a frame defining one or more trimmer openings to receive a cutting agent extending therethrough, and a complementary tab fixed to the frame in selective radial alignment and engagement with the retention tab to secure the bottom housing to the top housing.

The trimmer head of any one or more of the embodiments, wherein one or more trimmer openings are disposed below the top housing and complementary tab.

The trimmer head of any one or more of the embodiments, wherein the top housing further comprises a drive plate supporting the engagement button and comprising a peripheral rim surrounding and blocking external access to the complementary tab.

The trimmer head of any one or more of the embodiments, wherein the drive plate is disposed within the assembly cap.

The trimmer head of any one or more of the embodiments, wherein the retention tab is a primary retention tab, wherein the top housing further comprises an interior arm fixed to the engagement button apart from the primary retention tab to move with the engagement button, the interior arm defining a guide channel non-parallel and non-orthogonal to the radial direction, and a secondary retention tab circumferentially spaced apart from the primary retention tab, the secondary retention tab being engaged with the interior arm at the guide channel to move radially in response to movement of the interior arm.

The trimmer head of any one or more of the embodiments, wherein the complementary tab is a primary complementary tab, and wherein the bottom housing further comprises a secondary complementary tab fixed to the frame and circumferentially spaced apart from the primary complementary tab, the secondary complementary tab being in selective radial alignment and engagement with the secondary retention tab to further secure the bottom housing to the top housing.

The trimmer head of any one or more of the embodiments, wherein the secondary retention tab is spaced apart from the primary retention tab at an angle of approximately 90° about the axial direction.

The trimmer head of any one or more of the embodiments, wherein the frame comprises an outer wall extending continuously about the axial direction and defining an internal cavity to receive at least a portion of a trimmer line as the cutting agent, wherein the outer wall defines the one or more trimmer openings.

The trimmer head of any one or more of the embodiments, wherein the frame comprises an upper plate, a lower plate axially spaced apart from the upper plate to define the one or more trimmer openings, and a pivot head post extending between the upper and lower plates to support a pivotable flail head as the cutting agent.

The trimmer head of any one or more of the embodiments, wherein the bottom housing further comprises a pair of counter-rotating arm blades in selective engagement with the pivot head post.

A trimmer head for a trimmer, the trimmer head defining an axial direction and a radial direction, the trimmer head comprising: a top housing comprising an assembly cap defining a first radial access slot and a second radial access slot circumferentially spaced apart from the first radial access slot, a first engagement button slidably received along the first radial access slot to move therealong, a second engagement button slidably received along the second radial access slot to move therealong, and a retention tab in simultaneous, linked, mechanical communication with the first and second engagement buttons to move radially in response to a coordinated movement of the first and second engagement buttons, the retention tab being disposed apart from the first radial access slot and the second radial access slot; and a bottom housing selectively attached to the top housing, the bottom housing comprising a complementary tab in selective radial alignment and engagement with the retention tab to secure the bottom housing to the top housing.

The trimmer head of any one or more of the embodiments, wherein the bottom housing further comprises a frame defining one or more trimmer openings to receive a cutting agent extending therethrough, the one or more trimmer openings being disposed below the top housing and complementary tab.

The trimmer head of any one or more of the embodiments, wherein the top housing further comprises a drive plate supporting the first and second engagement buttons and comprising a peripheral rim surrounding and blocking external access to the complementary tab.

The trimmer head of any one or more of the embodiments, wherein the drive plate is disposed within the assembly cap.

The trimmer head of any one or more of the embodiments, wherein the retention tab comprises an upper axial guide post and a lower axial guide post radially spaced apart from the complementary tab, wherein the top housing further comprises a first-button interior arm fixed to the first engagement button apart from the first radial access slot to move with the first engagement button, the first-button interior arm defining a first-button-interior-arm guide channel non-parallel and non-orthogonal to the radial direction, the upper axial guide post being received within the first-button-interior-arm guide channel, and a second-button interior arm fixed to the second engagement button apart from the second radial access slot to move with the second engagement button, the second-button interior arm defining a second-button-interior-arm guide channel non-parallel and non-orthogonal to the radial direction, the lower axial guide post being received within the guide channel.

The trimmer head of any one or more of the embodiments, wherein the retention tab is a secondary retention tab, wherein the complementary tab is a secondary complementary tab, wherein the top housing further comprises a first primary retention tab circumferentially spaced apart from the secondary retention tab, the first primary retention tab being fixed to the first engagement button to move therewith along the radial direction apart from the first radial access slot, and a second primary retention tab circumferentially spaced apart from the secondary retention tab, the second primary retention tab being fixed to the second engagement button to move therewith along the radial direction apart from the second radial access slot.

The trimmer head of any one or more of the embodiments, wherein the bottom housing further comprises a first primary complementary tab circumferentially spaced apart from the secondary complementary tab, the first primary complementary tab being in selective radial alignment and engagement with the first primary retention tab to further secure the bottom housing to the top housing, and a second primary complementary tab circumferentially spaced apart from the secondary complementary tab, the second primary complementary tab being in selective radial alignment and engagement with the second primary retention tab to further secure the bottom housing to the top housing.

The trimmer head of any one or more of the embodiments, wherein the frame comprises an outer wall extending continuously about the axial direction and defining an internal cavity to receive at least a portion of a trimmer line as the cutting agent, wherein the outer wall defines the one or more trimmer openings.

The trimmer head of any one or more of the embodiments, wherein the frame comprises an upper plate, a lower plate axially spaced apart from the upper plate to define the one or more trimmer openings, and a pivot head post extending between the upper and lower plates to support a pivotable flail head as the cutting agent.

The trimmer head of any one or more of the embodiments, wherein the bottom housing further comprises a pair of counter-rotating arm blades in selective engagement with the pivot head post.

This written description uses examples to disclose the present application, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A trimmer head (110) for a trimmer (100), the trimmer head (110) defining an axial direction and a radial direction, the trimmer head (110) comprising:
a top housing (122) comprising
an assembly cap (126) defining a radial access slot (134, 136),
an engagement button (140, 142) slidably received along the radial access slot (134, 136) to move along the radial direction, and
a retention tab (144, 146, 150, 152) fixed to the engagement button (140, 142) to move therewith along the radial direction, the retention tab (144, 146, 150, 152) being disposed apart from the radial access slot (134, 136); and
a bottom housing (124) selectively attached to the top housing (122), the bottom housing (124) comprising
a frame (170) defining one or more trimmer openings (182) to receive a cutting agent extending therethrough, and
a complementary tab (172, 174, 176, 178) fixed to the frame (170) in selective radial alignment and engagement with the retention tab (144, 146, 150, 152) to secure the bottom housing (124) to the top housing (122).

2. The trimmer head (110) of claim 1, wherein one or more trimmer openings (182) are disposed below the top housing (122) and complementary tab (172, 174, 176, 178).

3. The trimmer head (110) according to any preceding claim, wherein the top housing (122) further comprises a drive plate (132) supporting the engagement button (140, 142) and comprising a peripheral rim (180) surrounding and blocking external access to the complementary tab (172, 174, 176, 178).

4. The trimmer head (110) according to any preceding claim, wherein the retention tab (144, 146, 150, 152) is a primary retention tab (144, 146), wherein the top housing (122) further comprises
an interior arm (154, 156) fixed to the engagement button (140, 142) apart from the primary retention tab (144, 146) to move with the engagement button (140, 142), the interior arm (154, 156) defining a guide channel (158, 160) non-parallel and non-orthogonal to the radial direction, and
a secondary retention tab (150, 152) circumferentially spaced apart from the primary retention tab (144, 146), the secondary retention tab (150, 152) being engaged with the interior arm (154, 156) at the guide channel (158, 160) to move radially in response to movement of the interior arm (154, 156).

5. The trimmer head (110) of claim 4, wherein the complementary tab (172, 174, 176, 178) is a primary complementary tab (172, 174), and wherein the bottom housing (124) further comprises
a secondary complementary tab (176, 178) fixed to the frame (170) and circumferentially spaced apart from the primary complementary tab (172, 174), the secondary complementary tab (176, 178) being in selective radial alignment and engagement with the secondary retention tab (150, 152) to further secure the bottom housing (124) to the top housing (122).

6. The trimmer head (110) according to any preceding claim, wherein the frame (170) comprises an upper plate (192), a lower plate (194) axially spaced apart from the upper plate (192) to define the one or more trimmer openings (182), and a pivot head post (196) extending between the upper and lower plates (192, 194) to support a pivotable flail head as the cutting agent.

7. The trimmer head (110) of claim 6, wherein the bottom housing (124) further comprises a pair of counter-rotating arm blades (214, 216) in selective engagement with the pivot head post (196).

8. A trimmer head (110) for a trimmer (100), the trimmer head (110) defining an axial direction and a radial direction, the trimmer head (110) comprising:
a top housing (122) comprising
an assembly cap (126) defining a first radial access slot (134) and a second radial access slot (136) circumferentially spaced apart from the first radial access slot (134),
a first engagement button (140) slidably received along the first radial access slot (134) to move therealong,
a second engagement button (142) slidably received along the second radial access slot (136) to move therealong, and
a retention tab (144, 146, 150, 152) in simultaneous, linked, mechanical communication with the first and second engagement buttons (140, 142) to move radially in response to a coordinated movement of the first and second engagement buttons (140, 142), the retention tab (144, 146, 150, 152) being disposed apart from the first radial access slot (134) and the second radial access slot (136); and
a bottom housing (124) selectively attached to the top housing (122), the bottom housing (124) comprising a complementary tab (172, 174, 176, 178) in selective radial alignment and engagement with the retention tab (144, 146, 150, 152) to secure the bottom housing (124) to the top housing (122).

9. The trimmer head (110) of claim 8, wherein the bottom housing (124) further comprises a frame (170) defining one or more trimmer openings (182) to receive a cutting agent extending therethrough, the one or more trimmer openings (182) being disposed below the top housing (122) and complementary tab (172, 174, 176, 178).

10. The trimmer head (110) according to any of claims 8 or 9, wherein the top housing (122) further comprises a drive plate (132) supporting the first and second engagement buttons (140, 142) and comprising a peripheral rim (180) surrounding and blocking external access to the complementary tab (172, 174, 176, 178).

11. The trimmer head (110) according to any of claims 8 through 10, wherein the retention tab (144, 146, 150, 152) comprises an upper axial guide post (162) and a lower guide post (162, 164) axial guide post (162, 164) (164) radially spaced apart from the complementary tab (172, 174, 176, 178),
wherein the top housing (122) further comprises
a first-button interior arm (154) fixed to the first engagement button (140) apart from the first radial access slot (134) to move with the first engagement button (140), the first-button interior arm (154) defining a first-button-interior-arm guide channel (158) non-parallel and non-orthogonal to the radial direction, the upper axial guide post (162) being received within the first-button-interior-arm guide channel (158), and
a second-button interior arm (156) fixed to the second engagement button (142) apart from the second radial access slot (136) to move with the second engagement button (142), the second-button interior arm (156) defining a second-button-interior-arm guide channel (160) non-parallel and non-orthogonal to the radial direction, the lower guide post (162, 164)axial guide post (162, 164) (164) being received within the second-button-interior-arm guide channel (160).

12. The trimmer head (110) according to any of claims 8 through 11, wherein the retention tab (144, 146, 150, 152) is a secondary retention tab (150, 152),
wherein the complementary tab is a secondary complementary tab (176, 178), wherein the top housing (122) further comprises
a first primary retention tab (144) circumferentially spaced apart from the secondary retention tab (150, 152), the first primary retention tab (144) being fixed to the first engagement button (140) to move therewith along the radial direction apart from the first radial access slot (134), and
a second primary retention tab (146) circumferentially spaced apart from the secondary retention tab (150, 152), the second primary retention tab (146) being fixed to the second engagement button (142) to move therewith along the radial direction apart from the second radial access slot (136).

13. The trimmer head (110) of claim 12, wherein the bottom housing (124) further comprises
a first primary complementary tab (172) circumferentially spaced apart from the secondary complementary tab (176, 178), the first primary complementary tab (172) being in selective radial alignment and engagement with the first primary retention tab (144) to further secure the bottom housing (124) to the top housing (122), and
a second primary complementary tab (174) circumferentially spaced apart from the secondary complementary tab (176, 178), the second primary complementary tab (174) being in selective radial alignment and engagement with the second primary retention tab (146) to further secure the bottom housing (124) to the top housing (122).

14. The trimmer head (110) according to any of claims 9 through 13, wherein the frame (170) comprises an upper plate (192), a lower plate (194) axially spaced apart from the upper plate (192) to define the one or more trimmer openings (182), and a pivot head post (196) extending between the upper and lower plates (192, 194) to support a pivotable flail head as the cutting agent.

15. The trimmer head (110) of claim 14, wherein the bottom housing (124) further comprises a pair of counter-rotating arm blades (214, 216) in selective engagement with the pivot head post (196).
